# EUROPÄISCHE PATENTSCHRIFT

(11) **EP 0 787 840 B1**
(45) Veröffentlichungstag und Bekanntmachung des Hinweises auf die Patenterteilung: **27.08.1997**
(21) Anmeldenummer: 96810077.6
(22) Anmeldetag: 06.02.1996
(51) Int. Cl.: D01F 13/02, C01B 31/26, C01B 17/74

(54) **Verfahren zur Herstellung von Viskoseprodukten**
Process for the production of viscose products
Procédé pour la production de produits en viscose

(43) Veröffentlichungstag der Anmeldung: 06.08.1997
(73) Patentinhaber: ING. A. MAURER SA, CH-3013 Bern (CH)
(72) Erfinder: Duveen, René F., CH-4455 Zunzgen (CH)
(74) Vertreter: BOVARD AG - Patentanwälte

(56) Entgegenhaltungen:
- AT-B- 398 785
- DE-A- 2 514 798
- DE-A- 2 711 897
- GB-A- 782 011
- CHEMICAL ENGINEERING, Bd. 79, Nr. 22, 2.Oktober 1972, Seite 36 XP002009673 JON E. BROWNING: "French Processes Paraded"

## Beschreibung

Die vorliegende Erfindung betrifft ein Herstellungsverfahren für Viskoseprodukte, in welchem die Herstellung des verwendeten Schwefelkohlenstoffes (CS₂) ebenfalls im Verfahren integriert ist, wobei die bei der Schwefelkohlenstoffherstellung entstehenden Nebenprodukte ebenfalls im Verfahren Verwendung finden. Das Verfahren ist ökologisch günstiger als bisherige Verfahren.

Bei der Herstellung von Viskoseprodukten, wie von Viskosefasern, Viskoseschwämmen, Wursthaut oder Viskosefolien, werden als Rohstoffe Schwefelkohlenstoff und Schwefelsäure verwendet. Die Herstellung dieser Rohstoffe wurde separat vorgenommen, bzw. die Rohstoffe wurden über den Chemikalienhandel bezogen.

Für die CS₂-Produktion existieren zwei Prozesstechnologien:
a) der elektrothermische Prozess, der auf Holzkohle und Schwefel basiert und deshalb auch Kohleprozess genannt wird. Dieser Prozess wird hauptsächlich für kleine Kapazitäten eingesetzt, um direkt vor Ort das CS₂ zu produzieren. Die Holzkohle wird dabei kalziniert, um Feuchtigkeit und flüssige Stoffe zu entfernen. Dadurch ist der Anteil von entstehendem Schwefelwasserstoff sehr gering. Eine separate Abluftbehandlung ist oft nicht nötig.
b) Der thermische Prozess, ausgehend von Methan oder Erdgas und Schwefel. Das Verfahren wird auch als Methanprozess bezeichnet. Hier entsteht je nach der Qualität des Methans bzw. des Erdgases neben dem Schwefelkohlenstoff eine bedeutende Menge an Schwefelwasserstoff (H₂S). Pro Kilogramm Schwefelkohlenstoff kann bis zu 1 kg Schwefelwasserstoff als Nebenprodukt anfallen. Dieses H₂S-Gas muss wieder aufbereitet werden, wodurch sich die Anlagekosten stark erhöhen und diese Technologie nur für grosse Leistungen von über 25'000 Jahrestonnen wirtschaftlich einsetzbar ist. Die Aufbereitung von Schwefelwasserstoff basiert vorwiegend auf der Umsetzung zu elementarem Schwefel mit dem sogenannten CLAUS-Prozess. Die Abgase aus der CLAUS-Anlage müssen zudem weiter gereinigt werden, wozu verschiedene Prozesstechnologien zur Verfügung stehen. Die Anlage kann nur an Standorten installiert werden, wo Methan oder Erdgas in genügend grossen Mengen zur Verfügung steht.

Die ebenfalls für die Viskoseprodukte benötigte Schwefelsäure (H₂SO₄) wird grosstechnisch durch nasskatalytische oder trockenkatalytische Verfahren hergestellt. Die Herstellung bei Viskoseherstellern lohnt sich nur bei grossen Anlagen. Da Schwefelsäure ein Tiefpreisprodukt ist, sind die Transportkosten ein bedeutender Kostenfaktor.

Die Behandlung der Abgase, die aus Industrieanlagen, die CS₂ und Schwefelsäure produzieren, entstehen, lassen sich in vier Gruppen unterscheiden.
a) Die Abgase werden katalytisch zu elementarem Schwefel in sogenannten CLAUS-Anlagen umgesetzt.
b) Die Abgase werden in einer Waschlösung absorbiert und nachfolgend katalytisch in der Flüssigphase oxidiert.
c) Die Abgase werden vom H₂S durch Absorption gereinigt und anschliessend wird durch Adsorption an Aktivkohle das CS₂ zurückgewonnen.
d) Die Abgase werden thermisch oder katalytisch zu SO₂ oxidiert, und anschliessend einer katalytischen Oxidation zu SO₃ unterworfen, welches anschliessend als Schwefelsäure zurückgewonnen wird.

Von den oben erwähnten Prozessen a) - c) sind eine Vielzahl von Varianten bekannt, die auch zum Einsatz gelangen. Seit 1980 wird der Prozess d) in einigen Anlagen durchgeführt.

In der chemischen Industrie werden die Produkte Schwefelkohlenstoff wie auch Schwefelsäure durch spezialisierte Unternehmen grosstechnisch produziert und verkauft. Ein ökonomischer Betrieb derartiger Anlagen erfordert eine Minimalgrösse solcher Anlagen. In der Viskoseindustrie ist demzufolge nur für Grossproduzenten eine Integration solcher Prozesse wirtschaftlich sinnvoll. Dies gilt insbesondere für CS₂ auf Basis des Methanprozesses, weil für die Durchführung von bekannten Technologien die Investitionssummen für die Behandlung des Nebenproduktes Schwefelwasserstoff in der gleichen Grössenordnung wie für die Schwefelkohlenstoffproduktionsanlage selbst liegt.

Abgase aus Produktionsanlagen können heute relativ kostengünstig zu Schwefelsäure umgesetzt werden. Diese Abgase decken jedoch nur einen kleinen Teil der benötigten Schwefelsäureproduktion. Bekannt ist deshalb die Zufeuerung von elementarem Schwefel zu den Abgasen, um die Schwefelsäureproduktion zu erhöhen.

Eine Variante dieser Technologie ist die Verbrennung der Abgase in einem Boilerhaus, wobei die Reinigung der Abluft vom SO₂ wieder katalytisch oder mittels Wäsche durchgeführt werden muss.

Es ist demzufolge Aufgabe der vorliegenden Erfindung, ein Verfahren zur Herstellung von Viskoseprodukten zu entwickeln, in welchem ebenfalls die Herstellung von Schwefelkohlenstoff integriert wird, wobei die bei der Schwefelkohlenstoffherstellung entstehenden schwefelhaltigen Abgase in den Prozess rückgeführt werden.

Es wurde gefunden, dass die bei der CS₂-Herstellung entstehenden schwefelhaltigen Abgase katalytisch in Schwefelsäure umgewandelt werden und diese Schwefelsäure direkt bei der Viskosebehandlung verwendet werden kann. Dadurch kann der bei der Herstellung von CS₂ erforderliche Schritt zur Abgasbehandlung umgangen werden, da das Nebenprodukt ebenfalls im Hauptprozess verwendet werden kann.

Gegenstand der vorliegenden Erfindung ist demzufolge ein Verfahren zur Herstellung von Viskoseprodukten gemäss der Definition im Anspruch 1. Gegenstand der vorliegenden Erfindung ist ebenfalls eine Vorrichtung zur Durchführung des genannten Verfahrens gemäss der Definition im Patentanspruch 7 . Im Verfahren zur Herstellung von Viskoseprodukten, insbesondere von Viskoseschwämmen, Viskosewursthäuten und Viskosefolien (Cellophan) wird die Herstellung von CS₂ ebenfalls in das Verfahren einbezogen. Die CS₂-Herstellung beruht auf dem Methanprozess, wobei die bei der CS₂-Herstellung und bei der Viskose-Herstellung anfallenden schwefelhaltigen Nebenprodukte einer gemeinsamen Behandlung unterworfen werden, durch welche Schwefelsäure erzeugt wird, die wiederum in das Viskose-Herstellungsverfahren rückgeführt wird. Falls Schwefelsäureüberschüsse entstehen, können diese anderweitig verwendet oder verkauft werden. Sofern die im Verfahren entstehenden Abgase nicht die erforderliche Mengen an H₂SO₄ ergibt, kann in der Abgasaufbereitungsanlage Schwefel zugefeuert werden. Die Kombination der beiden Verfahren bietet wirtschaftliche Vorteile, da die Investitions-, Betriebs- und Transportkosten vermindert werden. Im Verfahren werden demzufolge die zur Herstellung von Viskoseprodukten erforderlichen Rohstoffe Schwefelkohlenstoff und auch Schwefelsäure in ein und demselben Anlagenkomplex hergestellt. Durch den Wegfall der separaten Abgasbehandlungsanlagen (CLAUS-Anlage und Ablufbehandlung für die CLAUS-Anlage) können bedeutend kleinere Produktionskapazitäten wirtschaftlich gebaut werden. Demzufolge lohnt sich das erfindungsgemässe kombinierte Verfahren auch für kleinere Viskose-Hersteller. Im erfindungsgemässen Verfahren sind die Vorbehandlung, die Reaktion und die CS/H₂S-Trennungidentisch mit denjenigen in der traditionellen CS₂-Produktionsanlage, welche nach dem Methanprozess arbeitet. Das Nebenprodukt H₂S muss jedoch nicht mehr in einer oder mehreren Stufen zu elementarem Schwefel rückgeführt werden, sondern kann direkt in einer Abgasbehandlungsanlage zu SO₃ umgesetzt und als Schwefelsäure zurückgewonnen werden. Eine separate Schwefelsäureherstellungsanlage, die aus elementarem Schwefel mittels trocken- oder nasskatalytischem Prozess Schwefelsäure herstellt, bzw. der Zukauf von Schwefelsäure kann somit vollständig entfallen.

Im Verfahren gemäss der Erfindung verarbeitet die für beide Verfahren gemeinsame Abgasbehandlungsanlage sowohl das Abgas aus der CS₂-Anlage als auch aus der industriellen Produktionsanlage für das Viskoseendprodukt in der Viskoseindustrie. Hergestellt werden dabei unter anderem Stapelfaser, Filamente, Folien, Wursthäute und dgl. Die Abgase enthalten ebenfalls Schwefelsäure und/oder brennbare Komponenten.

Die Abgasbehandlung kann mit verschiedenen Prozessen und deren Varianten durchgeführt werden, welche zu SO₃ und/oder Schwefelsäure als Endprodukt führen. Derartige Verfahren sind in der Schwefelchemie bekannt.

Als typisches Verfahren soll hier eine katalytische Oxidation erwähnt werden. Derartige Reaktionen dienen der Entfernung von H₂S und CS₂ und anderen gasförmigen Schwefelkomponenten von industriellen Abgasen aus der Schwefelchemie. Typische Verfahren sind das KVT-Sulfox-HK-Verfahren und das KVT-Sulfox-NK-Verfahren, (KVT-Kanzler Verfahrenstechnik GmbH, Graz, Österreich und Ing. A. Maurer SA, Bern, Schweiz, AT-B-398 785, DE-A-2 514 798). Die Verfahren sind katalytische Zweibettoxidationsverfahren. Das erste Katalysatorbett besteht aus einem Katalysator, welcher CS₂ und H₂S in SO₂ umwandelt und fähig ist, den Hauptteil des SO₂ in SO₃ umzuwandeln. Das verbleibende SO₂ wird in einer zweiten katalytischen Stufe in SO₃ umgewandelt, wobei ein kommerzieller Vanadiumkatalysator zum Einsatz gelangt. Das Rohgas geht zuerst durch einen Demister und wird dann unter Wärmerückgewinnung von heissen Gasen aus dem Reaktor erwärmt. Der Brenner steuert die ideale Temperatur des Rohgases, welches in einen Reaktor geführt wird. Nach der Reaktion wird es im Rohgaswärmeaustauscher abgekühlt und mit einer Temperatur unterhalb des Säuretaupunktes in den Absorber geführt. Dort wird das Schwefeltrioxid absorbiert und die Schwefelsäure wird durch den Boden abgelassen. Die verbleibenden Schwefelsäureaerosole werden durch einen elektrostatischen Filter abgetrennt.

Die gereinigte Luft, welche den Luftreinhaltebestimmungen entspricht, geht dann in die Atmosphäre.

Viskosefasern, typische Vertreter von Viskoseprodukten, werden nach dem Viskoseverfahren hergestellt. Die Viskosefasern sind ein wichtiger Vertreter der Chemiefasern.

Generell werden Viskosefasern hergestellt, indem man von Zellstoff ausgeht, der in Natronlauge alkalisiert wird. Dann wird der Zellstoff abgepresst und es entsteht Alkalicellulose. Im nachfolgenden Vorreifeprozess tritt eine Depolymerisation ein. Anschliessend wird die gereifte Alkalicellulose mit CS₂ umgesetzt. Bei dieser Sulfidierung oder Xanthogenierung entsteht eine orangegelbe Masse aus Cellulosexanthogenat.

Anschliessend wird dieses Xanthogenat in Natronlauge gelöst und homogenisiert. Die entstandene Viskose wird während der Nachreife filtriert und entlüftet und steht als Spinnlösung bereit. Bei Hindurchpressen durch Spinndüsen kommt es durch Reaktion mit dem schwefelsauren Spinnbad zur Regenerierung der Cellulose und damit zur Fadenbildung (Spinnen). Der Faden oder Fadenstrang wird mit Walzen von der Düse abgezogen und aus dem Spinnbad entfernt.

Das Spinnbad, eine wässrige Lösung aus Schwefelsäure, Natriumsulfat und Zinksulfat, nimmt einen Teil des wieder freigesetzten CS₂ und des als Nebenprodukt entstehenden Schwefelwasserstoffes auf. In der Regeneration der Cellulosefasern und Nachbehandlung wird ein grosser Teil an CS₂ zurückgewonnen und wieder im Prozess verwendet. An einigen Stellen entweicht ein Abluftstrom mit Schwefelwasserstoff und Schwefelkohlenstoff, welche einer Abluftnachbehandlung zugeführt werden. Auch hier kann beispielsweise das vorher erwähnte "Sulfox"-Verfahren verwendet werden. Die Abgase der Spinnbadentgasung werden hier ebenfalls behandelt. Die Raumentlüftung enthält sehr geringe Mengen von Schwefelwasserstoff und Schwefelkohlenstoff, welche normalerweise über Dach abgeführt werden können. Bei der Herstellung von Filamentfasern, Folien, Schwämmen oder Wursthaut sind die Regeneration und die Nachbehandlung den Anforderungen angepasst. Auch hier entstehen Abgase, die einer Abgasbehandlung zugeführt werden müssen.

Anhand der beiliegenden Figuren wird die Erfindung näher erläutert. Fig. 1 zeigt ein Verfahrensdiagramm des erfindungsgemässen Verfahrens zur Herstellung von Viskoseprodukten, Fig. 2 zeigt zum Vergleich und zum besseren Verständnis der Erfindung ein Verfahrensdiagramm eines entsprechenden Verfahrens gemäss dem Stand der Technik und Fig. 3 zeigt ein detailiertes Verfahrensdiagramm des in einer Viskoseanlage ablaufenden Verfahrens.

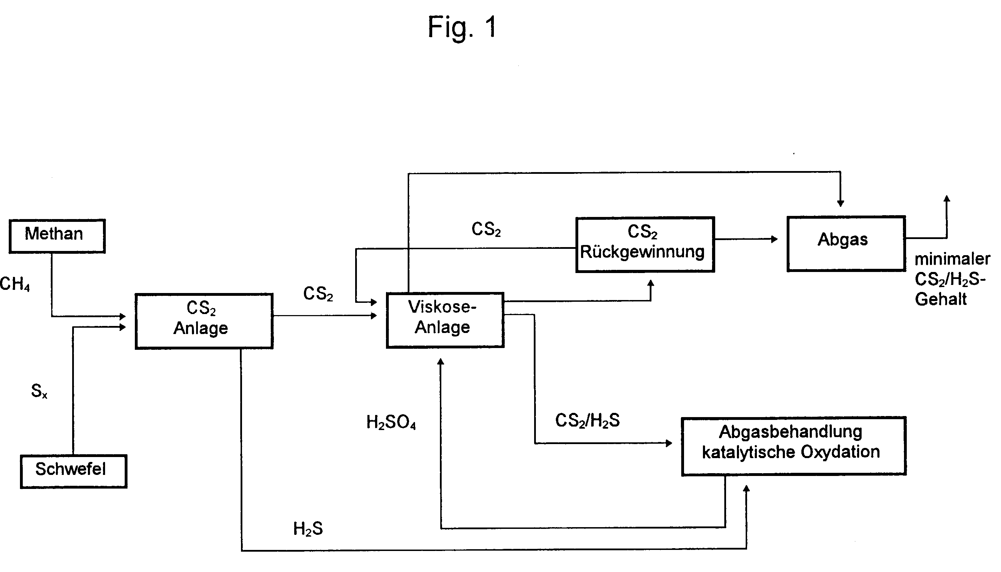

Aus der Fig. 1 ist ersichtlich, dass im Verfahren von Methan und Schwefel ausgegangen wird, um Schwefelkohlenstoff herzustellen. Pro Tonne Viskosefasern werden folgende Mengen eingesetzt: Aus 36 kg Methan und 286 kg Schwefel entstehen 170 kg Schwefelkohlenstoff. Als Nebenprodukt entsteht dabei 152 kg Schwefelwasserstoff, welcher erfindungsgemäss der katalytischen Oxidationsstufe zugeführt wird. Der hergestellte Schwefelkohlenstoff wird in die Viskoseanlage übergeführt. Hier wird in bekannter Weise das Viskoseprodukt hergestellt, wobei als Nebenprodukt wiederum schwefelkohlenstoff- und schwefelwasserstoffhaltige Abluft entsteht. Der Hauptteil des Schwefelkohlenstoffes, welcher in den Abgasen vorhanden ist, wird in die Anlage zurückgeführt. Ein grosser Teil der restlichen Abluft wird ebenfalls dem katalytischen Oxidationsschritt unterworfen. Dieser Schritt wird erfindungsgemäss in der gleichen Vorrichtung vorgenommen werden, wie die Behandlung des Abgases von der Schwefelkohlenstofferzeugung. Bei der katalytischen Oxidation entsteht aus den schwefelhaltigen Gasen unter Bildung des Zwischenproduktes SO₃ ca. 800 kg Schwefelsäure, welche ihrerseits in die Viskoseanlage zurückgeführt wird. Allfällige Schwefelsäureüberschüsse können einer anderweitigen Verwendung zugeführt werden.

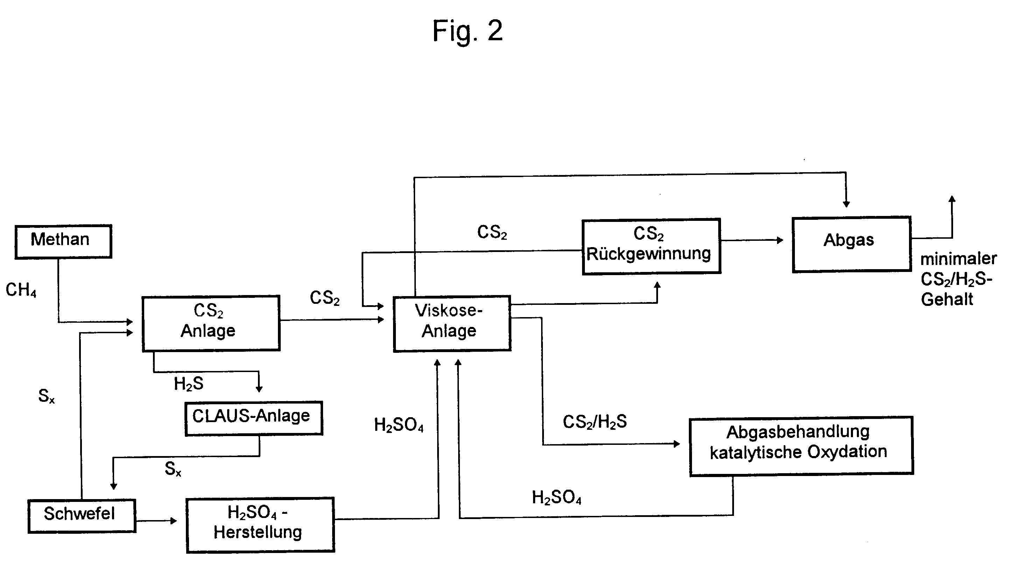

Fig. 2 zeigt ein Diagramm des konventionellen Verfahrens zur Herstellung von Viskoseprodukten, welches dem Vergleich zum erfindungsgemässen Verfahren gemäss Fig. 1 dient. Auch hier wird pro Tonne Viskosefasern von 36 kg Methan und 286 kg Schwefel ausgegangen. Der bei der Schwefelkohlenstoffherstellung gebildete Schwefelwasserstoff wird hier in eine CLAUS-Anlage eingeleitet, worin Schwefel erzeugt wird, welches wiederum zur Schwefelkohlenstoffanlage zurückgeführt werden kann oder aber insgesamt für die Schwefelsäureproduktion zum Einsatz gelangen kann. Die erzeugte Schwefelsäure wird direkt in die Viskoseanlage eingeleitet. Im übrigen funktioniert das Verfahren gleich wie dasjenige, welches in Fig. 1 beschrieben ist. Der Hauptunterschied besteht darin, dass im erfindungsgemässen Verfahren ein Weg gefunden wurde um ohne CLAUS-Anlage und ohne Schwefelsäure-Erzeugungs-Anlage auszukommen. Darin wird der Schwefelwasserstoff, welcher bei der Schwefelkohlenstoffproduktion anfällt, direkt einer katalytischen Oxidation unterworfen, wobei Schwefelsäure entsteht, die ins Spinnbad der Viskoseanlage rückgeführt werden kann. Hier ist deutlich ersichtlich, dass der Investitionsaufwand und die Betriebskosten beim erfindungsgemässen Verfahren deutlich kleiner sind, was bei der Viskoseherstellung zu beträchtlichen Einsparungen führt.

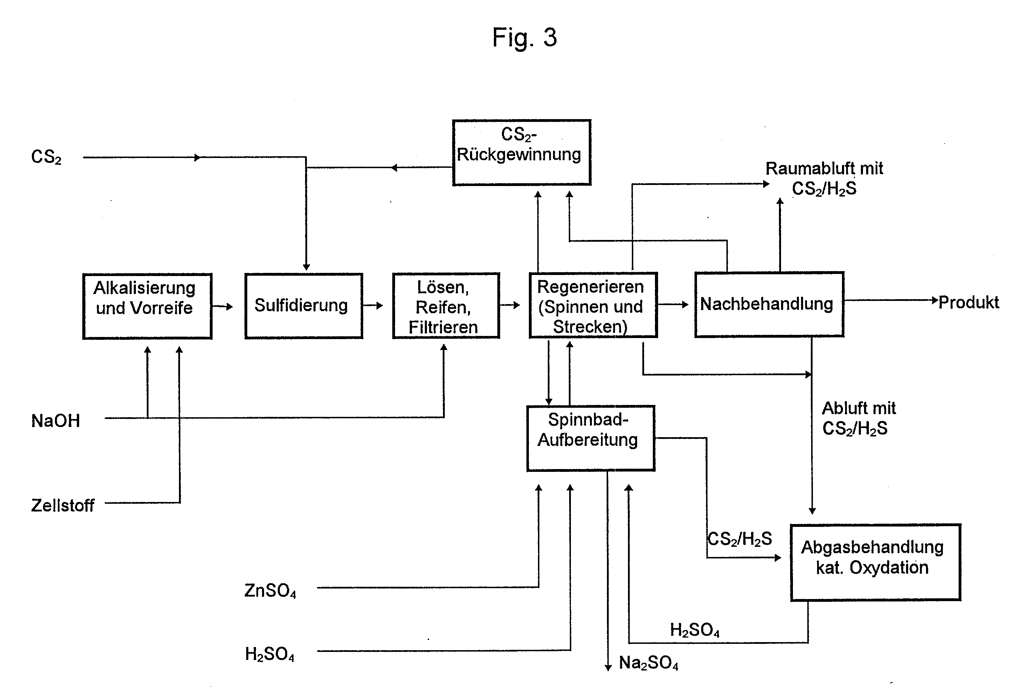

In Fig. 3 ist die Viskoseherstellung schematisch dargestellt. Als Ausgangsprodukt wird Zellstoff, z.B. Holzzellstoff verwendet, der mit Natronlauge behandelt wird (Alkalisierung). Nach einem Abpressen wird das behandelte Produkt während einer gewissen Zeit gelagert (Vorreife).

Das erhaltene Produkt wird danach durch Umsetzung mit CS₂ einer Sulfidierung unterworfen. Anschliessend wird das erhaltene Produkt mit Natronlauge aufgelöst und zu einer weiteren Reifung einer Lagerung unterworfen (Lösen, Reifen, Filtrieren).

Das Produkt wird darauf einem Spinnprozess unterworfen, wobei es durch in ein Spinnbad gerichtete Düsen gepresst wird. Das Spinnbad enthält eine wässrige Lösung von Schwefelsäure, Natriumsulfat und Zinksulfat. Das erhaltene Produkt wird dann gestreckt und schliesslich weiteren Nachbehandlungen unterworfen, wie beispielsweise Waschen, Entschwefeln und Färben.

Aus dem Diagramm ist ersichtlich, bei welchen Stufen Nebenprodukte entstehen, die einer Behandlung unterworfen werden. Insbesondere fällt beim Regenerieren freigesetzter Schwefelkohlenstoff an, ebenso Abluft mit einem Schwefelkohlenstoff- und Schwefelwasserstoffgehalt. Ebenso entsteht solche Abluft bei der Nachbehandlung. Der Schwefelkohlenstoff wird zurückgewonnen und direkt wieder dem Viskoseprozess zugeführt. Die schwefelkohlenstoff- und schwefelwasserstoffhaltige Abluft wird in einer Abgasbehandlung einer katalytischen Oxidation unterworfen. Diese erfolgt im erfindungsgemässen Verfahren gemeinsam mit der H₂S Behandlung der CS₂ Anlage.

Der Hauptteil des Schwefelkohlenstoffes, welcher in den Abgasen der Viskoseanlage vorhanden ist, wird in kondensierter Form in die Anlage zurückgeführt. Die übrigen Abgase werden einer Reinigung unterworfen, so dass der Gehalt an schwefelhaltigen Produkten die vorgeschriebenen Grenzwerte nicht überschreitet.

## Patentansprüche

1. Verfahren zur Herstellung von Viskoseprodukten, insbesondere von Viskosefasern und -Filamenten, Viskoseschwämmen und Viskosefolien, in einer Viskose-Anlage, ausgehend von Cellulose, NaOH und unter Verwendung eines Spinnbades, das H₂SO₄ enhält, dadurch gekennzeichnet, dass der CS₂, der als Ausgangsmaterial verwendet wird, kontinuierlich und unmittelbar vor seiner Verwendung in einer CS₂-Anlage hergestellt wird, welche CS₂-AnBage mit der Viskose-Anlage verbunden ist, wobei die bei der CS₂-Herstellung entstehenden Abgase gemeinsam mit der in der Viskose-Anlage entstehenden Abluft in eine Abluftaufbereitungsanlage geführt werden, wo die in den Abgasen enthaltenen gasförmigen Schwefelverbindungen in H₂SO₄ übergeführt werden, wobei die erhaltene H₂SO₄, soweit für die Viskoseherstellung erforderlich, in die Viskose-Anlage rückgeführt wird.

2. Verfahren nach Anspruch 1, dadurch gekennzeichnet, dass die Herstellung des CS₂ in der CS₂-Anlage durch ein thermisches Verfahren, ausgehend von Methan und Schwefel durchgeführt wird.

3. Verfahren nach Anspruch 1, dadurch gekennzeichnet, dass die Herstellung des CS₂ in der CS₂-Anlage durch ein elektrothermisches Verfahren, ausgehend von Holzkohle und Schwefel durchgeführt wird.

4. Verfahren nach einem der Ansprüche 1 bis 3, dadurch gekennzeichnet, dass die gasförmigen Schwefelverbindungen der Abgase in der Abgasaufbereitungsanlage durch katalytische Oxidation in SO₃ übergeführt werden, und das erhaltene SO₃ zu H₂SO₄ umgesetzt wird.

5. Verfahren nach einem der Ansprüche 1 bis 4, dadurch gekennzeichnet, dass die im Verfahren nicht benötigte H₂SO₄ aus dem Verfahren abgezweigt und einer andern Verwendung zugeführt wird.

6. Verfahren nach einem der Ansprüche 1 bis 4, dadurch gekennzeichnet, dass in der Abgasaufbereitungsanlage Schwefel zugefeuert wird, damit zusätzliche H₂SO₄ entsteht, sofern die im Verfahren entstehenden Abgase nicht die erforderliche Menge an H₂SO₄ ergibt.

7. Vorrichtung zur Durchführung des Verfahrens nach einem der Ansprüche 1 bis 6, dadurch gekennzeichnet, dass sie aus einer Kombination besteht, die eine Anlage zur Herstellung von CS₂, eine Anlage zur Herstellung von Viskoseprodukten und eine Anlage zur Behandlung von schwefelhaltigen Abgasen zur Erzeugung von Schwefelsäure umfasst, wobei die Anlage zur Herstellung von CS₂ derart mit der Anlage zur Herstellung von Viskoseprodukten verbunden ist, dass laufend soviel CS₂ produziert und in die Viskoseanlage geleitet wird, wie in der Viskoseanlage zur Produktion erforderlich ist, und die Abgasbehandlungsanlage in solcher Weise mit der CS₂-Anlage und der Viskoseanlage verbunden ist, dass die schwefelhaltigen Abgase zur Behandlung in die Abgasanlage eingeleitet werden und die durch die Behandlung erzeugte Schwefelsäure in die Viskoseanlage zurückgeführt wird.

8. Vorrichtung nach Anspruch 7, dadurch gekennzeichnet, dass die CS₂-Anlage nach dem Methanverfahren arbeitet.

## Claims

1. Process for manufacturing viscose products, particularly viscose · fibres and filaments, viscose sponges, and viscose films, in a viscose plant, starting from cellulose, NaOH, and using a spinning bath containing H₂SO₄, characterised in that the CS₂ which is used as starting material is produced continuously and immediately before its use in a CS₂ plant, which CS₂ plant is connected to the viscose plant, the waste gases arising during the CS₂ production being led together with the waste air arising in the viscose plant into a waste-air treatment plant where the gaseous sulfur compounds contained in the waste gases are converted into H₂SO₄, the H₂SO₄ obtained, insofar as necessary for the viscose manufacture, being returned to the viscose plant.

2. Process according to claim 1, characterised in that the production of the CS₂ in the CS₂ plant is carried out by a thermal process, starting from methane and sulfur.

3. Process according to claim 1, characterised in that the product of the CS₂ in the CS₂ plant is carried out by an electrothermal process, starting from charcoal and sulfur.

4. Process according to one of the claims 1 to 3, characterised in that the gaseous sulfur compounds of the waste gases are converted in the waste-gas treatment plant to SO₃ by catalytic oxidation, and the SO₃ obtained is reacted to H₂SO₄.

5. Process according to one of the claims 1 to 4, characterised in that the H₂SO₄ not needed in the process is branched off from the process and supplied to another use.

6. Process according to one of the claims 1 to 4, characterised in that that sulfur is additionally fired in the waste-gas treatment plant so that additional H₂SO₄ is produced insofar as the waste gases arising in the process do not yield the required amount of H₂SO₄.

7. Device for carrying out the process according to one of the claims 1 to 6, characterised in that it consists of a combination which comprises a plant for producing CS₂, a plant for manufacturing viscose products, and a plant for treating sulfurous waste gases for producing sulfuric acid, the plant for producing CS₂ being connected to the plant for manufacturing viscose products in such a way that as much CS₂ is continuously produced and led into the viscose plant as is required for production in the viscose plant, and the waste-gas treatment plant is connected to the CS₂ plant and the viscose plant in such a way that the sulfurous waste gases are introduced into the waste-gas plant for treatment, and the sulfuric acid produced by the treatment is returned to the viscose plant.

8. Device according to claim 7, characterised in that the CS₂ plant operates according to the methane process.

## Revendications

1. Procédé pour la production de produits en viscose, en particulier de fibres et de filaments en viscose, d'éponges viscose et de feuilles viscose dans une station de production de viscose, à partir de cellulose, de NaOH et en utilisant un bain de filage qui contient du H₂SO₄, caractérisé en ce que le CS₂, utilisé en tant que matériau de départ, est produit de manière continue et immédiatement avant son utilisation dans une station de production de CS₂, laquelle station de production de CS₂ est reliée à la station de production de viscose, les gaz d'échappement qui se forment lors de la production de CS₂ et l'air d'échappement qui émane de la station de production de viscose étant amenés ensemble dans une station de traitement d'air d'échappement dans laquelle les composés de soufre gazeux contenus dans les gaz d'échappement sont transformés en H₂SO₄, le H₂SO₄ obtenu, dans la mesure où il est indispensable à la production de viscose, étant reconduit à la station de production de viscose.

2. Procédé selon la revendication 1, caractérisé en ce que la production de CS₂ dans la station de production de CS₂ s'effectue par un procédé thermique, à partir de méthane et de soufre.

3. Procédé selon la revendication 1, caractérisé en ce que la production de CS₂ dans la station de CS₂ s'effectue par un procédé électrothermique à partir de charbon de bois et de soufre.

4. Procédé selon l'une des revendications 1 à 3, caractérisé en ce que les composés de soufre gazeux des gaz d'échappement dans la station de traitement de gaz d'échappement sont transformés en SO₃ par oxydation catalytique et le SO₃ obtenu est converti en H₂SO₄.

5. Procédé selon l'une des revendications 1 à 4, caractérisé en ce que le H₂SO₄ qui n'est pas utilisé dans le procédé, en est séparé et sert à une autre utilisation.

6. Procédé selon l'une des revendications 1 à 4, caractérisé en ce que dans la station de traitement de gaz d'échappement on y brûle du souffre afin d'obtenir un surplus de H₂SO₄ dans la mesure où les gaz d'échappement se formant dans le procédé ne donnent pas la quantité nécessaire de H₂SO₄.

7. Installation pour mettre en oeuvre le procédé selon l'une des revendications 1 à 6, caractérisée en ce qu'elle consiste en une combinaison comprenant une station de production de CS₂, une station de production de produits en viscose et une station de traitement de gaz d'échappement contenant du soufre pour obtenir de l'acide sulfurique, la station de production de CS₂ étant reliée à la station de production de produits en viscose de telle manière que soit produit et amené en continu à la station de production de viscose autant de CS₂ que la production dans la station de viscose le nécessite, et la station de traitement de gaz d'échappement étant reliée à la station de production de CS₂ de manière à ce que les gaz d'échappement contenant du soufre soient conduits dans la station de traitement de gaz d'échappement pour y être traités et que l'acide sulfurique résultant du traitement retourne dans la station de production de viscose.

8. Dispositif selon la revendication 7, caractérisé en ce que la station de production de CS₂ travaille selon le procédé au méthane.
